# EUROPÄISCHE PATENTSCHRIFT

(11) **EP 2 174 739 B1**
(45) Veröffentlichungstag und Bekanntmachung des Hinweises auf die Patenterteilung: **14.08.2019**
(21) Anmeldenummer: 09012321.7
(22) Anmeldetag: 29.09.2009
(51) Int. Cl.: B23H 9/00, B23H 9/08, B23P 15/32

(54) **Verfahren zur Herstellung eines Bohrers, insbesondere eines Gesteinsbohrers**
Method for producing a driller, in particular a stone driller
Procédé de fabrication d'un foreur, notamment d'un foreur de roches

(30) Priorität: 13.10.2008 DE 102008051018; 15.06.2009 DE 102009025307; 06.08.2009 DE 102009036285
(43) Veröffentlichungstag der Anmeldung: 14.04.2010
(73) Patentinhaber: Heller Tools GmbH, 49413 Dinklage (DE)
(72) Erfinder: Kersten, Heinrich, 27283 Verden (DE); Elmers, Sven, 49413 Dinklage (DE); Lampe, Rainer, 49413 Dinklage (DE); Kosel, Klaus, 88361 Altshausen (DE)
(74) Vertreter: Gottschald, Jan

(56) Entgegenhaltungen:
- DE-U1-202007 002 120
- US-A- 5 810 103
- US-A1- 2007 157 763

## Beschreibung

Die Erfindung betrifft ein Verfahren zur Herstellung eines Bohrers, insbesondere eines Gesteinsbohrers, mit den Merkmalen des Oberbegriffs von Anspruch 1 und einen solchen Bohrer mit den Merkmalen des Oberbegriffs von Anspruch 14.

Die in Rede stehenden Bohrer umfassen alle Arten von Bohrern, sind jedoch insbesondere, aber nicht ausschließlich, für den Einsatz in Verbindung mit einer Hammer-, Schlag- und/oder Drehbohrvorrichtung vorgesehen. Sie eignen sich daher insbesondere für das Bohren in Beton oder Stahlbeton, aber auch in sonstigem Mauerwerk, Fels o. dgl.. Besonders hohe Anforderungen an den Bohrer ergeben sich beim Bohren von metallisch armiertem Werkstoff.

Wesentliche Kriterien für die Gestaltung von Bohrern der in Rede stehenden Art sind die einfache Zentrierung, der erzielbare Bohrfortschritt pro Zeiteinheit, die hohe Einsatzzeit und nicht zuletzt der geringe Verschleiß.

Ein bekannter Bohrer (DE 199 64 272 C2) ist mit einem Schaft und einer am Schaft angeordneten Schneidplatte mit zwei in Draufsicht gegenüberliegenden Schneiden ausgestattet, die an ihrer Oberseite jeweils mit einer Schneidkante ausgestattet sind. Die Schneidkanten sind jeweils durch eine vorlaufend angeordnete Spanfläche und eine nachlaufend angeordnete Freifläche gebildet.

Ferner zeigt die US 2007/157763 A1 ein Verfahren zur Herstellung eines Bohreinsatzes, bei dem eine Aufschweißlegierung auf den Bohreinsatz aufgetragen wird, eine Schneidwerkzeugstasche in dem Bohreinsatz durch Funkenerosion gebildet wird und ein Schneidwerkzeug in die Schneidwerkzeugstasche eingesetzt wird.

Die US 5,810,103 wiederum zeigt das Anbringen einer PKD-(polykristalliner Diamant)-Schneide an einem Werkzeug. Dabei weist die PKD-Schneide eine Bohrung auf, in welche ein Befestigungsmittel eingesetzt wird. Das Befestigungselement weist ein Werkzeugbefestigungsende auf, welches aus der PKD-Schneide herausragt.

Als "Bohrkopf' wird vorliegend ganz allgemein der Teil des Bohrers bezeichnet, der die Schneiden mit den daran angeordneten Schneidkanten aufweist. Bei dem bekannten Bohrer ist der Bohrkopf entsprechend die Schneidplatte.

Der Schaft des bekannten Bohrers ist stirnseitig mit einem quer zu der Bohrerachse verlaufenden Schlitz ausgestattet, mit dem der Bohrkopf, hier die Schneidplatte, formschlüssig in Eingriff steht. Mit dem Formschluss lässt sich eine optimale Drehmomentübertragung zwischen dem Schaft einerseits und dem Bohrkopf andererseits erreichen. Der Schlitz bildet somit eine Verbindungsausformung.

Bei der Herstellung des bekannten Bohrers wird zunächst ein im wesentlichen zylindrischer Schaft-Rohling erzeugt. Anschließend wird durch eine Fräsbearbeitung der Schlitz in den Schaft eingebracht. Schließlich wird der Bohrkopf in den Schlitz eingesetzt und dort verlötet.

Im Rahmen des obigen Verfahrens wird auch eine Abfuhrnut in den Schaft eingefräst. Dieser Verfahrensschritt spielt vorliegend aber eine untergeordnete Rolle und wird im folgenden nicht weiter berücksichtigt.

Das oben beschriebene Verfahren zur Herstellung eines Bohrers, von dem die vorliegende Erfindung ausgeht, beschränkt in erheblichem Maße die konstruktive Freiheit bei der Entwicklung eines solchen Bohrers. Komplizierte Geometrien lassen sich, soweit die Verbindungsausformung betroffen ist, schlichtweg nicht realisieren.

Der Erfindung liegt das Problem zugrunde, das bekannte Verfahren zur Herstellung eines Bohrers derart auszugestalten und weiterzubilden, dass die konstruktive Freiheit bei der Auslegung des Bohrers erhöht wird.

Das obige Problem wird gelöst durch ein Verfahren mit den Merkmalen des Anspruchs 1 und durch einen Bohrer mit den Merkmalen des Anspruchs 14. Hierbei handelt es sich um ein abtragendes Fertigungsverfahren, mit dem nahezu beliebige Geometrien erzeugt werden können, ohne dass es zu einem Kontakt zwischen ECM-Werkzeug und Schaft-Rohling kommt.

Beim ECM-Verfahren wird ganz allgemein eine speziell geformte Kathode dem als Anode dienenden Werkstück unter Anlegen einer elektrischen Spannung angenähert, wobei zwischen Kathode und Anode ein Elektrolyt eingeschlossen ist. Das Werkstück wird dabei bereichsweise anodisch abgetragen. Das Abtragen hängt u.a. von der Formgebung des ECM-Werkzeugs sowie von dessen Bewegungsführung ab. Weitere Verfahrensparameter sind die angelegte elektrische Spannung sowie Umgebungsparamter wie Temperatur, Luftdruck etc.

Das ECM-Verfahren ist in einigen Ausprägungen zwar bereits bekannt geworden. In diesem Zusammenhang sei die Veröffentlichung "Werkzeugmaschinen, Fertigungssysteme - Maschinenarten und Anwendungsbereiche", Manfred Weck, Springer-Verlag, 5. Auflage, 1998, S. 289-294, genannt. Auf diese Veröffentlichung wird zur Erläuterung der Grundlagen zum ECM-Verfahren Bezug genommen.

Es ist im Rahmen der beanspruchten Lehre allerdings erkannt worden, dass das an sich bekannte ECM-Verfahren eine Besonderheit aufweist, die für den hier sehr speziellen Anwendungsbereich des Einbringens der in Rede stehenden Verbindungsausformung überraschende Vorteile mit sich bringt. Während des Abtragens durch das ECM-Verfahren wird die Gitterstruktur des Schaftmaterials nämlich nicht oder jedenfalls nicht spürbar verändert. Die mechanischen Eigenschaften des Schafts insbesondere im Bereich der Verbindungsausformung werden beim Abtragen entsprechend nicht negativ beeinflusst. Dies führt zu einer weiteren, bisher ungeahnten Steigerung der Flexibilität bei der konstruktiven Gestaltung in Bezug auf die Auslegung der Verbindungsausformung, da die mechanische Stabilität hier besonders im Vordergrund steht.

Von besonderem Vorteil ist weiter die Tatsache, dass sich die resultierende Oberflächenrauhigkeit im Bereich der im ECM-Verfahren hergestellten Verbindungsausformung in einem weiten Bereich einstellen lässt. Dies kann für die Verbindung des Bohrkopfs mit dem Schaft eine wichtige Rolle spielen.

Bei der bevorzugten Variante gemäß Anspruch 2 ist es zum Einbringen der Verbindungsausformung durch elektrochemische Bearbeitung vorgesehen, dass ein ECM-Werkzeug über dem Schaft-Rohling unter Einschluss eines Elektrolyts positioniert und eine ggf. gepulste elektrische Gleichspannung zwischen dem ECM-Werkzeug und dem Schaftrohling angelegt wird. Dabei bildet das ECM-Werkzeug regelmäßig die Kathode und der Schaftrohling die Anode.

Das ECM-Werkzeug ist zumindest abschnittsweise als Negativform bezogen auf die Verbindungsausformung ausgestaltet. Nach dem Anlegen der Gleichspannung löst sich der Schaft im Abtragsbereich anodisch auf und nimmt die entsprechende Form an.

Die Ansprüche 3 bis 13 betreffen bevorzugte Ausgestaltungen des ECM-Werkzeugs, die sich am besten über die resultierende Verbindungsausformung beschreiben lassen.

Nach einer weiteren Lehre gemäß Anspruch 14, der ebenfalls eigenständige Bedeutung zukommt, wird der nach dem Verfahren gemäß der beanspruchten Lehre hergestellte Bohrer als solcher beansprucht.

Wesentlich ist bei dem Bohrer nach dieser weiteren Lehre entsprechend die Tatsache, dass die Verbindungsausformung eine in obiger Weise durch elektrochemische Bearbeitung in den Schaft eingebrachte Ausformung ist. Das Dehnungs- und Bruchverhalten eines so hergestellten Bohrers ist außerordentlich gut. Alle vorliegend beschriebenen Merkmale sind für sich oder in Kombination in vollem Umfange auf diesen Bohrer anwendbar.

Im folgenden wird die Erfindung anhand von Ausführungsbeispielen näher erläutert. In der Zeichnung zeigt:

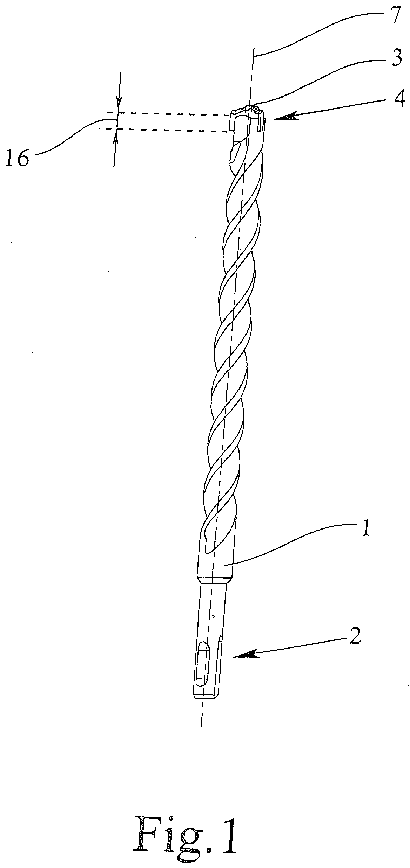

- Fig. 1: ein Ausführungsbeispiel eines erfindungsgemäßen Bohrers in einer Seitenansicht,

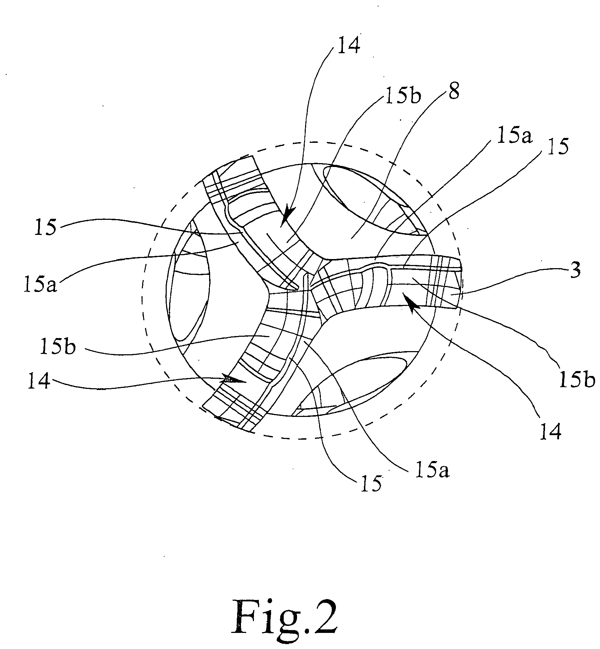

- Fig. 2: den Gesteinsbohrer gemäß Fig. 1 in Draufsicht,
- Fig. 3: den Gesteinsbohrer gemäß Fig. 1 in einer perspektivischen Ansicht ohne Bohrkopf,
- Fig. 4: einige bevorzugte Grundformen zur Beschreibung vorteilhafter Ausgestaltungen der Verbindungsausformung und/oder des Bohrkopfs jeweils in einer Draufsicht,
- Fig. 5: weitere bevorzugte Grundformen gemäß Fig. 4,
- Fig. 6: weitere bevorzugte Grundformen gemäß Fig. 4,
- Fig. 7: weitere bevorzugte Grundformen gemäß Fig. 4,
- Fig. 8: eine Nut der Verbindungsanordnung des Gesteinsbohrers gemäß Fig. 3 im Querschnitt,
- Fig. 9: den Bohrkopf des Gesteinsbohrers gemäß Fig. 1 als solchen in einer weiteren bevorzugten Ausgestaltung in Draufsicht,
- Fig. 10: den Bohrkopf gemäß Fig. 9 in einer weiteren bevorzugten Ausgestaltung,
- Fig. 11: einen erfindungsgemäßen Gesteinsbohrer in einer perspektivischen Ansicht ohne Bohrkopf gemäß einer weiteren bevorzugten Ausgestaltung und
- Fig. 12: einen erfindungsgemäßen Gesteinsbohrer in einer perspektivischen Ansicht ohne Bohrkopf in einer weiteren bevorzugten Ausgestaltung.

Der in der Zeichnung dargestellte, vorschlagsgemäße Bohrer weist einen Schaft 1 mit Einsteckende 2 und einem am dem Einsteckende 2 abgewandten Ende des Schafts 1 angeordneten Bohrkopf 3 auf, der insbesondere als Hartmetall-Bohrkopf ausgelegt ist. Der Bohrer ist hier und vorzugsweise ein Gesteinsbohrer. Denkbar ist aber auch die Auslegung des Bohrers auf das Bohren aller möglichen Materialien wie Holz oder Metall. Alle folgenden, einen Gesteinsbohrer betreffenden Ausführungen gelten daher in vollem Umfange für alle anderen Arten von Bohrern.

Der Bohrkopf 3 ist hier und vorzugsweise als Bohreinsatz ausgestaltet. Denkbar ist aber auch, dass der Bohrkopf 3 als Bohraufsatz ausgestaltet ist.

Im fertig hergestelltem Zustand ist in der dem Einsteckende 2 abgewandten Stirnseite 4 des Schaftes 1 eine Verbindungsausformung 5 für einen formschlüssigen Eingriff mit dem Bohrkopf 3 vorgesehen.

Bei der Herstellung des Gesteinsbohrers wird in einem Verfahrensschritt zunächst ein im wesentlichen zylindrischer Schaft-Rohling erzeugt. Hierbei findet regelmäßig ein Fließ-Pressverfahren Anwendung. In einem nachfolgenden Verfahrensschritt, der dem zuvor beschriebenen Verfahrensschritt nicht unmittelbar folgen muss, wird die Verbindungsausformung 5 in den Schaft 1 eingebracht. In einem weiter nachfolgenden Verfahrensschritt, der dem zuvor beschriebenen Verfahrensschritt ebenfalls nicht unmittelbar folgen muss, wird der Bohrkopf 3 über die Verbindungsausformung 5 formschlüssig in Eingriff mit dem Schaft 1 gebracht. Dort kann ein Verlöten o. dgl. des Bohrkopfes 3 mit dem Schaft 1 erfolgen.

Nach einem ersten Lösungsansatz, der auch im Sinne einer Lehre beanspruchbar sein soll, wird die Verbindungsausformung 5 durch Kaltumformung in den Schaft 1 eingebracht.

Wesentlich ist nach der beanspruchten Lehre aber, dass die Verbindungsausformung 5 durch elektrochemische Bearbeitung (ECM) in den Schaft 1 eingebracht wird. Dabei ist es vorzugsweise so, dass zum Einbringen der Verbindungsausformung 5 ein ECM-Werkzeug über dem Schaft-Rohling 1 unter Einschluss eines Elektrolyts positioniert und eine elektrische Gleichspannung zwischen dem ECM-Werkzeug und dem Schaft-Rohling angelegt wird. Dabei ist das ECM-Werkzeug zumindest teilweise als Negativform bezogen auf die Verbindungsausformung 5 ausgestaltet.

Für die Auslegung des ECM-Verfahrens sind zahlreiche Varianten denkbar. In einer bevorzugten Variante wird zwischen dem ECM-Werkzeug und dem Schaft-Rohling 1 eine gepulste Gleichspannung angelegt. Ferner kann es vorgesehen sein, dass die Vorschubbewegung des ECM-Werkzeugs zu dem Schaft-Rohling 1 hin als alternierende Bewegung realisiert ist.

Die Form des nicht dargestellten Stempels bzw. des nicht dargestellten ECM-Werkzeugs zum Einbringen der Verbindungsausformung 5 lässt sich am besten anhand der resultierenden Form der Verbindungsausformung 5 erläutern.

An dieser Stelle darf darauf hingewiesen werden, dass zusätzlich auch weitere Verbindungsausformungen vorgesehen sein können, die beispielsweise durch Fräsbearbeitung in den Schaft 1 eingebracht werden. Ferner darf darauf hingewiesen werden, dass einer Kaltumformung eine beliebige Nachbearbeitung der Verbindungsausformung 5 durch Schleifen, Entgraten, o. dgl. folgen kann.

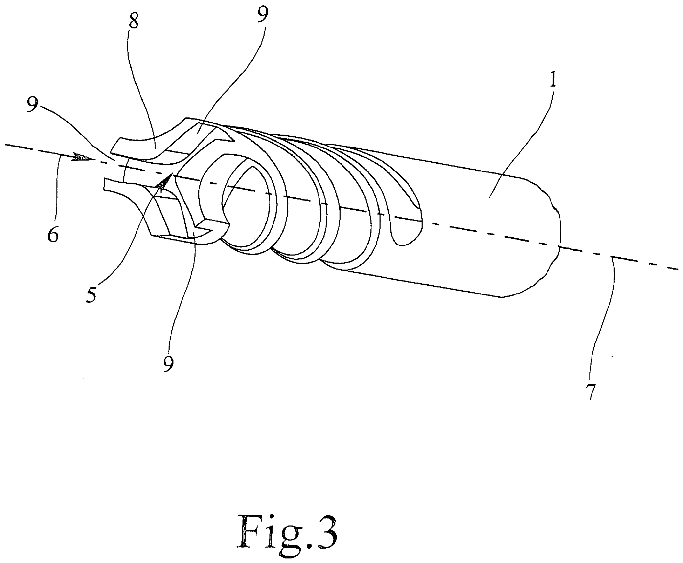

Fig. 3 zeigt den Schaft 1 nach dem Einbringen der Verbindungsausformung 5. Vor dem Einbringen der Verbindungsausformung 5 weist die dem Einsteckende 2 abgewandte Stirnseite 4 des Schaft-Rohlings 1 eine Stirnfläche 8 auf, die vorzugsweise eben, kegelförmig oder rundlich ausgebildet ist. Diese Stirnfläche 8 ist vorzugsweise auf die Bohrerachse 7 ausgerichtet. Nach dem Einbringen der Verbindungsausformung 5 verbleibt je nach Ausgestaltung des Stempels bzw. des ECM-Werkzeugs ein Rest der Stirnfläche 8, wie in der Zeichnung dargestellt.

Es kann vorteilhaft sein, dass die Verbindungsausformung 5 in Draufsicht zumindest abschnittsweise im wesentlichen kreis-, ellipsen- oder ringförmig ausgestaltet ist. Bei der kreis- oder ellipsenförmigen Ausgestaltung der Verbindungsausformung 5 handelt es sich bei der Verbindungsausformung 5 um eine wannenartige oder um eine bolzenartige Ausformung, deren Vertiefung bzw. Erhebung sich im wesentlichen axial erstreckt. Bei der ringförmigen Ausgestaltung ist die Verbindungsausformung 5 eine Nut oder ein Steg, dessen Vertiefung bzw. Erhebung sich ebenfalls axial erstreckt. Der Kreis, die Ellipse oder der Ring ist vorzugsweise auf die Bohrerachse 7 ausgerichtet. Mit der ellipsenförmigen Ausgestaltung lässt sich die Drehmomentübertragung zwischen dem Schaft 1 einerseits und dem Bohrkopf 3 andererseits am besten realisieren. Bei der obigen, im wesentlichen kreisförmigen Ausgestaltung der Verbindungsausformung 5 kann es weiter vorzugsweise vorgesehen sein, dass die Randfläche der kreisförmigen Ausformung als Ritzel, als Mehrkant, insbesondere als Sechskant o. dgl. ausgestaltet ist.

Sofern es sich bei dem Bohrkopf 3 um einen Bohreinsatz handelt, ist es so, dass die Verbindungsausformung 5 mindestens eine Nut 9 aufweist. Alternativ oder zusätzlich kann es aber auch vorgesehen sein, dass die Verbindungsausformung 5 mindestens einen Steg aufweist. Auch hier ist es so, dass sich die jeweilige Vertiefung bzw. Erhebung im wesentlichen axial erstreckt. Die dargestellten Ausführungsbeispiele zeigen in diesem Zusammenhang ausschließlich Nuten 9, was nicht beschränkend zu verstehen ist.

Auch in den folgenden Ausführungen ist in obigem Sinne ausschließlich von Nuten 9 der Verbindungsausformung 5 die Rede. Alle eine Nut 9 oder Nuten 9 betreffenden Ausführungen gelten aber aufgrund der ähnlichen Grundgestaltung vollumfänglich auch für einen entsprechenden Steg bzw. für entsprechende Stege.

Ferner ist in den folgenden Ausführungen fast ausschließlich von mehreren Nuten 9 oder Stegen die Rede. Diese Ausführungen gelten aber, soweit es auf die Mehrzahl der Nuten 9 oder Stege nicht ankommt, auch für eine einzelne Nut 9 oder einen einzelnen Steg.

Vorzugweise ist die Verbindungsausformung 5 wie oben angesprochen mit mehreren Nuten 9 ausgestattet. Bei dem in Fig. 3 dargestellten Ausführungsbeispiel handelt es sich um genau drei Nuten 9. Dabei erstrecken sich die Nuten 9 in Draufsicht im wesentlichen flügelartig von einem Flügelmittelpunkt aus, der insbesondere in der Bohrerachse 7 liegt. Denkbar ist aber auch, dass der Flügelmittelpunkt außerhalb der Bohrerachse 7 liegt, was zu einer insgesamt asymmetrischen Anordnung führt.

Bei allen dargestellten Ausführungsbeispielen sind die Nuten 9 durchgängig ausgestaltet. Denkbar ist aber auch, dass die Nuten 9 abschnittsweise unterbrochen sind.

Vorzugsweise verlaufen die Nuten 9 im wesentlichen senkrecht zu der Bohrerachse 7. Es kann auch vorteilhaft sein, dass die Nuten 9 durch die Bohrerachse 7 hindurch laufen.

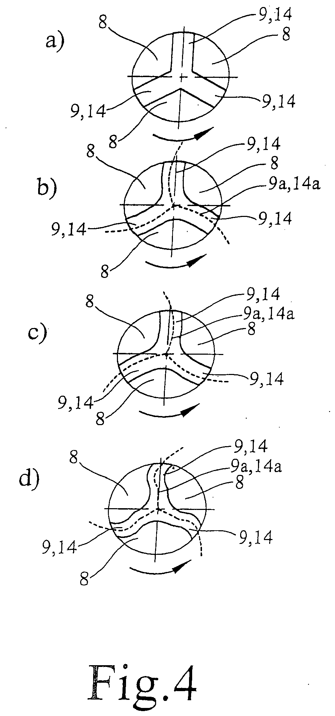

Fig. 4 zeigt eine Reihe bevorzugter Grundformen für vorteilhafte Varianten von Verbindungsausformungen 5 in Draufsicht, wobei hier jeweils drei Nuten im wesentlichen flügelartig angeordnet sind.

Bei der Darstellung in Fig. 4a) verläuft jede Nut 9 vollständig gerade. Denkbar ist auch, dass die Nuten 9 von diesem geraden Verlauf, zumindest abschnittsweise abweichen.

Entsprechend ist in den Figuren 4b), c), d) gezeigt, dass die Nuten 9 in Draufsicht gekrümmt verlaufen.

Bei der Ausgestaltung gemäß Fig. 4b) ist es so, dass in Draufsicht die Nuten 9 von Innen nach Aussen entlang eines Bogens 9a mit einer Krümmungsrichtung verlaufen, die der Drehrichtung des Gesteinsbohrers, die in Fig. 4b) als Pfeil dargestellt ist, entgegengerichtet ist. In obigem Sinne ist die Drehrichtung in Fig. 4b) linksherum, die Krümmungsrichtung dagegen rechtsherum vorgesehen.

Denkbar ist aber auch gemäß Fig. 4c), dass in Draufsicht die Nuten 9 von Innen nach Aussen entlang eines Bogens 9a mit einer Krümmungsrichtung verlaufen, die der Drehrichtung des Gesteinsbohrers gleichgerichtet ist. Hierbei handelt es sich um eine schaufelartige Ausgestaltung der Nuten 9, die sich als ganz besonders vorteilhaft herausgestellt hat. In obigem Sinne ist die Drehrichtung in Fig. 4c) linksherum und die Krümmungsrichtung ebenfalls linksherum vorgesehen.

Fig. 4d) zeigt eine bevorzugte Ausgestaltung, bei der in Draufsicht die Nuten 9 entlang einer Bogenlinie 9a im wesentlichen S-förmig verlaufen. Damit ist gemeint, dass beim Durchlaufen einer Nut mindestens ein Wendepunkt durchschritten wird.

Es wurde schon darauf hingewiesen, dass das vorschlagsgemäße Herstellungsverfahren eine Vielzahl neuartiger Verbindungsausformungen 5 ermöglicht. Insbesondere lässt sich mit dem vorschlagsgemäßen Herstellungsverfahren erreichen, dass die Geometrie, insbesondere die Breite der Nuten 9, über deren jeweiligen Verlauf gesehen, variiert.

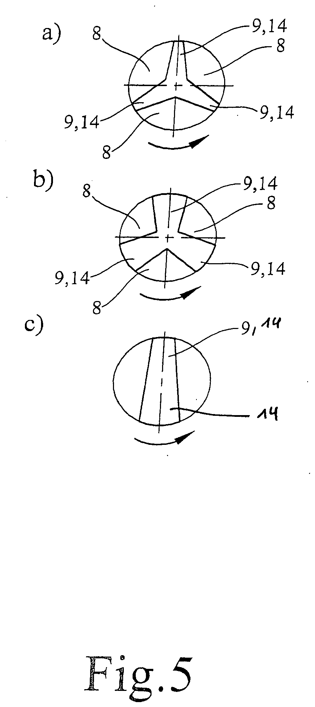

Vor diesem Hintergrund kann es vorteilhaft sein, dass in Draufsicht die beiden Aussenkanten einer Nut 9 nicht parallel ausgerichtet sind. Dies ist in Fig. 5c) dargestellt.

Denkbar ist aber auch, dass sich in Draufsicht die Nuten 9 von der Bohrerachse 7 ausgehend nach Aussen hin verjüngen (Fig. 5a)), oder, dass sich die Nuten 9 von Aussen zu der Bohrerachse 7 hin verjüngen (Fig. 5b)).

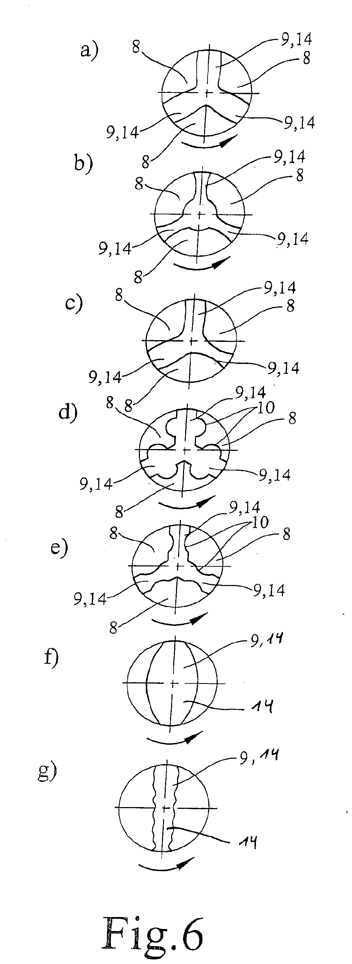

Fig. 6 zeigt weitere Varianten, bei denen sich die Geometrie der Nuten 9 über deren jeweiligen Verlauf verändert, wobei die Aussenkanten der Nuten 9 hier jeweils nicht gerade verlaufen.

Fig. 6a), f) zeigen eine bevorzugte Ausgestaltung, bei der in Draufsicht die beiden Aussenkanten der Nuten 9 im wesentlichen konvex ausgebildet sind. Fig. 6b) zeigt dagegen, dass in Draufsicht die beiden Aussenkanten der Nuten 9 im wesentlichen konkav ausgebildet sind.

Fig. 6c) zeigt, dass eine in obiger Weise konvex ausgebildete Nut 9 mit einer in obiger Weise konkav ausgebildeten Nut 9 und einer gebogenen Nut 9 kombiniert sein kann.

An dieser Stelle darf darauf hingewiesen werden, dass alle hier erläuterten Einzelgeometrien, auch in Kombination miteinander Anwendung finden können. Insbesondere ist es wie oben möglich, dass eine Nut einer ersten Nutform mit einer Nut einer zweiten Nutform kombinierbar wird. Es kann auch vorteilhaft sein, dass sich die Nuten 9 selbst aus mehreren Formelementen zusammensetzen. Beispielsweise weisen die Nuten 9 in Draufsicht zumindest eine konvexe Ausbuchtung 10 in zumindest einer der Aussenkanten auf (Fig. 6d)). Denkbar ist auch, dass die Nuten 9 in Draufsicht zumindest eine konkave Ausbuchtung 10 in zumindest einer Aussenkante aufweisen (Fig. 6e)). Die beschriebenen Ausbuchtungen 10 sind in Draufsicht vorzugsweise im wesentlichen kreisabschnittsförmig ausgebildet. Weiter vorzugsweise kann es vorgesehen sein, dass in Draufsicht die Ausbuchtung 10 exzentrisch zu der Bohrerachse 7 angeordnet ist.

Fig. 6g) zeigt noch eine bevorzugte Ausgestaltung, bei der die Verbindungsausformung 5 eine unregelmäßige Struktur aufweist. Damit soll verdeutlicht werden, dass auch eine Ausgestaltung der Nuten 9 nach Art einer Freiform denkbar ist.

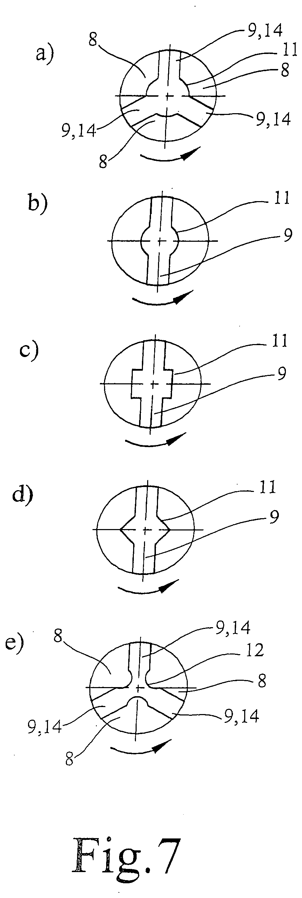

Die Fig. 7a) bis d) zeigen bevorzugte Varianten, bei denen in Draufsicht die Nuten im Bereich der Bohrerachse 7 in eine Mittenausformung 11 münden, wobei die Mittenausformung 11 weiter vorzugsweise kreisförmig (Fig. 7a), b)), elliptisch oder eckig (Fig. 7c), d)) ausgestaltet ist.

Fig. 7e) zeigt eine weitere bevorzugte Ausgestaltung, die ebenfalls im Mittenbereich eine Besonderheit aufweist. Hier ist es nämlich so, dass in Draufsicht die Aussenkanten einer Nut 9 jeweils über einen Radius 12 in die Aussenkante einer jeweils benachbarten Nut 9 übergeht, wobei hier und vorzugsweise der Radius 12 so ausgelegt ist, dass die Nuten 9 im Bereich der Bohrerachse 7 jeweils eine Einschnürung aufweisen.

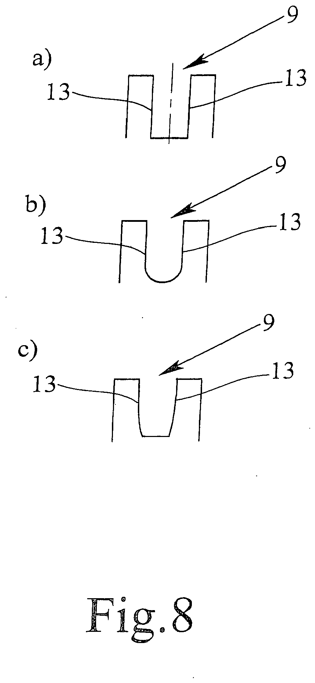

Die oben erläuterten bevorzugten Ausgestaltungen zeichnen sich durch eine besondere Formgebung der Nuten 9 in Draufsicht aus. Mit den vorschlagsgemäßen Verfahren lassen sich bei geeigneter Ausgestaltung des Stempels bzw. des ECM-Werkzeugs aber auch verschiedene Querschnittsformen der Nuten 9 realisieren. Dies ist anhand von drei bevorzugten Ausführungsbeispielen in Fig. 8 dargestellt.

Bei der in Fig. 8a) dargestellten und insoweit bevorzugten Ausführungsform sind die Seitenwände der dort dargestellten Nut 9 zueinander parallel ausgerichtet. Grundsätzlich kann es aber auch vorgesehen sein, dass die Geometrie der Nut 9 über die axiale Erstreckung der Nut 9 variiert. Im einfachsten Fall bedeutet dies, dass die Seitenwände der Nut 9 nicht parallel ausgerichtet sind und dass sich die Breite der Nut 9 über die axiale Erstreckung der Nut 9 vergrößert oder verkleinert.

Denkbar ist aber auch, dass die Seitenwände 13 der Nut 9 im Querschnitt gekrümmt sind, wie in Fig. 8c) dargestellt ist. Alternativ oder zusätzlich kann es vorgesehen sein, dass der Nutgrund oder die gegebenenfalls vorhandene Stegfläche im Querschnitt gekrümmt sind, wie in Fig. 8b) dargestellt ist. Mit "Stegfläche" ist die an der Oberseite des ggf. vorhandenen Stegs angeordnete Fläche gemeint.

Bei bestimmten Anwendungsfällen kann es auch interessant sein, dass die Tiefe einer Nut 9 im Verlauf der Nut 9 variiert. Dies kann insbesondere bei insgesamt asymmetrisch ausgestalteten Bohrköpfen 3 von Vorteil sein.

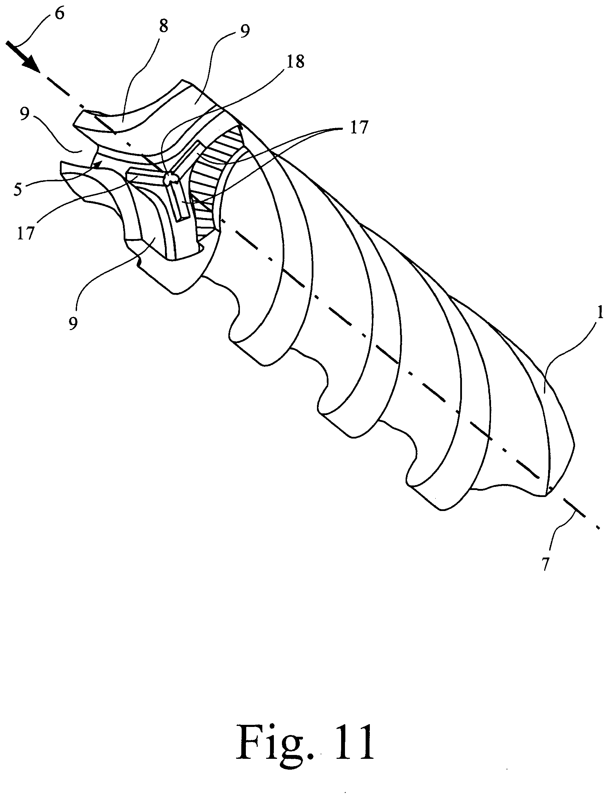

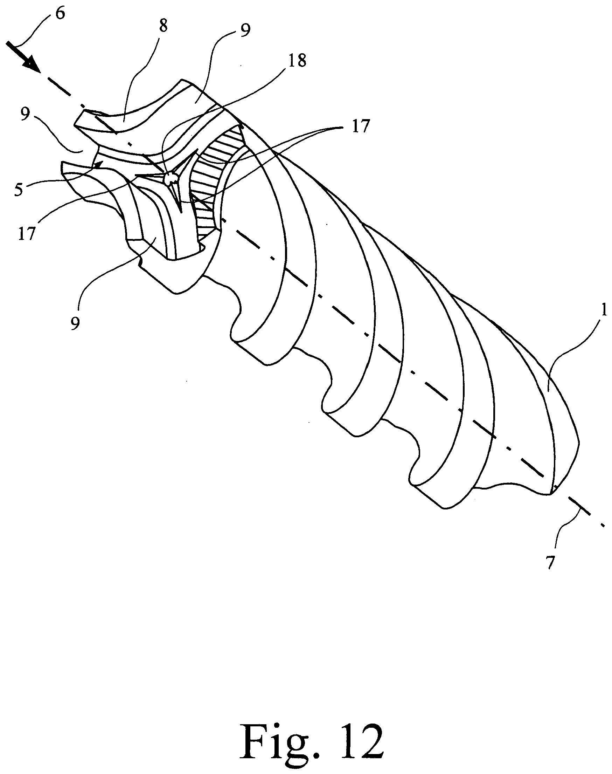

Die Tatsache, dass mit den vorschlagsgemäßen Verfahren der Nutgrund der Nut 9 weitgehend beliebig gestaltet werden kann, machen sich die in den Fig. 11 und 12 dargestellten Gesteinsbohrer zunutze.

Vom grundsätzlichen Aufbau her entsprechen die in den Fig. 11 und 12 dargestellten Gesteinsbohrer dem in Fig. 3 dargestellten Gesteinsbohrer. Die in den Fig. 11 und 12 dargestellten Gesteinsbohrer sind entsprechend mit drei Nuten 9 ausgestattet, die sich in Draufsicht im Wesentlichen flügelartig von einem Flügelmittelpunkt, der in der Bohrerachse 7 liegt, erstrecken. Bei den Darstellungen in den Fig. 11 und 12 ist jeweils der in der Zeichnung vordere Wandbereich der Nuten 9 weggelassen worden, um die dortige Besonderheit des Nutgrundes sichtbar zu machen.

Bei beiden in den Fig. 11 und 12 dargestellten Ausführungsbeispielen weist der Nutgrund der jeweiligen Nut 9 einen Bodensteg 17 auf, so dass insgesamt drei Bodenstege 17 vorgesehen sind. Die Bezeichnung "Bodensteg" soll verdeutlichen, dass es sich hier um einen Steg handelt, der dem Boden der Nut 9, also dem Nutgrund, zuzurechnen ist. Der Bodensteg 9 weist eine axiale Höhe auf. Damit ragt der Bodensteg 17 von dem Nutgrund im Übrigen in axialer Richtung ab.

Bei entsprechender Ausgestaltung des Bohrkopfes 3 stützt der Bodensteg 17 den Bohrkopf 3 derart ab, dass zwischen dem Nutgrund und dem Bohrkopf 3 ein Zwischenraum verbleibt. Mit diesem Zwischenraum kann gewährleistet werden, dass der Bohrkopf 3 im eingesetzten Zustand noch in gewissen Grenzen ausgerichtet werden kann. Damit lässt sich die Fertigungsgenauigkeit erhöhen.

Vorzugsweise wird nach dem Einsetzen des Bohrkopfes 3 in einem nachfolgenden Verfahrensschritt der Bohrkopf 3 mit dem Schaft 1 verlötet. Beim Löten fließt das geschmolzene Lot in den obigen Zwischenraum zwischen dem Nutgrund und dem Bohrkopf 3, so dass nach dem Verlöten der Zwischenraum zumindest im Wesentlichen mit Lot gefüllt ist.

Dem zwischen dem Bohrkopf 3 und dem Schaft 1 angeordneten Lot kommt schwingungsdämpfende Wirkung zu. Es hat sich in Versuchen gezeigt, dass sich hiermit eine Erhöhung der Lebensdauer des in der Regel aus Hartmetall bestehenden Bohrkopfs 3 zur Folge hat.

Der Zwischenraum zwischen dem Nutgrund und dem Bohrkopf 3 hat aber auch einen anderen Vorteil. Dadurch, dass die Unterseite des Bohrkopfs 3 beim Verlöten in obiger Weise mit dem geschmolzenen Lot in Kontakt kommt, konnte eine Verbesserung der Lötverbindung zwischen dem Schaft 1 und dem Bohrkopf 3 erreicht werden.

Es sind verschiedene Varianten für die Ausgestaltung des Bodenstegs 17 denkbar. Vorzugsweise ist die Längserstreckung des Bodenstegs 17 auf die Längserstreckung der jeweiligen Nut 9 ausgerichtet, wie in den Fig. 11 und 12 gezeigt. Dort ist es ferner so, dass sich der Bodensteg 17 über lediglich einen Teil der Nut 9 erstreckt. Grundsätzlich kann es aber auch vorgesehen sein, dass sich der Bodensteg 17 über die gesamte Nut 9 erstreckt.

Es kann auch vorteilhaft sein, dass die Höhe des Bodenstegs 17 über seine Längserstreckung gesehen konstant ist. Dies ist in der Darstellung gemäß Fig. 11 gezeigt. Damit lässt sich eine besonders gute Abstützung des Bohrkopfs 3 erreichen.

In weiter bevorzugter Ausgestaltung ist es allerdings vorgesehen, dass sich die Höhe des Bodenstegs 17 über seine Längserstreckung gesehen verändert (Fig. 12). Hier und vorzugsweise ist es so, dass sich die Höhe des Bodenstegs 17 von einem radial innenliegenden Bereich zu einem radial außenliegenden Bereich hin reduziert. Bei der in Fig. 12 dargestellten und insoweit bevorzugten Anordnung ist es sogar so, dass sich die Höhe des Bodenstegs 17 auf etwa halber Länge der jeweiligen Nut 9 auf Null reduziert, also gewissermaßen in den Nutgrund übergeht. Mit dieser Ausgestaltung des Bodenstegs 9 lassen sich die Freiheitsgrade beim Ausrichten des Bohrkopfs 3 ganz erheblich erhöhen.

Bei den in den Fig. 11 und 12 dargestellten und insoweit bevorzugten Ausgestaltungen sind drei Nuten 9 und drei zugeordnete Bodenstege 17 vorgesehen. Die Bodenstege 17 laufen von oben gesehen sternförmig im Bereich der Bohrerachse 7 zusammen. Durch die resultierende Symmetrie lässt sich ein optimaler Kompromiss zwischen Abstützwirkung einerseits und Ausrichtbarkeit andererseits erzielen.

Für die Formgebung des jeweiligen Bodenstegs 17 sind zahlreiche Varianten denkbar. Im Längsschnitt gesehen kann der Bodensteg 17 beispielsweise eine gerade oder bogenförmige Oberkante aufweisen. Im Querschnitt ist es hier und vorzugsweise vorgesehen, dass der Steg im Wesentlichen dachförmig ausgestaltet ist (Fig. 11, 12). Dabei können die Dachschrägen jeweils gerade oder gebogen ausgestaltet sein. Mit der dachförmigen Ausgestaltung lässt sich in erster Näherung ein Linienkontakt zwischen dem jeweiligen Bodensteg 17 und dem Bohrkopf 3 realisieren.

Hier und vorzugsweise weist der Nutgrund im Bereich der Bohrerachse 7 eine axiale Zentralerhebung 18 auf. Die Zentralerhebung 18 kann als Zentrierspitze gegenüber dem Bohrkopf 3 dienen. Dann ist auf der Unterseite des Bohrkopfs 3 vorzugsweise eine der Zentralerhebung 18 entsprechende Ausnehmung vorgesehen.

Bei den in den Fig. 11 und 12 dargestellten und insoweit bevorzugten Ausführungsbeispielen gehen die Bodenstege 17 im Bereich der Bohrerachse 7 in die axiale Zentralerhebung 18 über. Dabei ist es vorzugsweise so, dass die Zentralerhebung 18 eine größere axiale Höhe als die Bodenstege 17 aufweist, so dass die obige Zentrierwirkung gewährleistet ist. Bei entsprechender Ausstattung des Bohrkopfes 3 mit einer der Zentralerhebung 18 entsprechenden Ausnehmung kommt es dann auch zu der oben angesprochenen Abstützung des Bohrkopfs 3 durch die Bodenstege 17.

Für die Formgebung der Zentralerhebung 18 sind zahlreiche vorteilhafte Varianten denkbar. Im Sinne einer Zentrierspitze ist es vorzugsweise vorgesehen, dass die axiale Zentralerhebung 18 als Kegelstumpf ausgestaltet ist.

Es darf noch darauf hingewiesen werden, dass die axiale Zentralerhebung 18 grundsätzlich die gleiche axiale Höhe wie die Bodenstege 17 aufweisen kann. Dann kommt der axialen Zentralerhebung 18 im Wesentlichen eine Stabilisierungsfunktion für die angrenzenden Bodenstege 17 zu.

Der jeweilige Bodensteg 17 und/oder die obige Zentralerhebung 18 ist bzw. sind vorzugsweise mit abgerundeten Kanten ausgebildet, um das Auftreten von Kerbwirkungen weitestgehend zu vermeiden.

Der nach dem obigen Verfahren hergestellte Gesteinsbohrer wird vorliegend auch als solcher beansprucht.

Ergänzend zu den obigen Ausführungen darf darauf hingewiesen werden, dass der Bohrkopf 3 des vorschlagsgemäßen Gesteinsbohrers mindestens zwei Schneiden 14 aufweist, wobei die Schneiden 14 an ihrer Oberseite jeweils eine Schneidkante 15 aufweisen, die durch eine vorlaufend angeordnete Spanfläche 15a und durch eine nachlaufend angeordnete Freifläche 15b gebildet ist.

Wesentlich ist jedoch bei dem vorschlagsgemäßen Gesteinsbohrer die Tatsache, dass die Verbindungsausformung 5 eine durch Kaltumformung in den Schaft 1 eingebrachte Ausformung ist.

Im Hinblick auf Vorteile und bevorzugte Varianten der Verbindungsausformung 5 darf in vollem Umfange auf die obigen Ausführungen verwiesen werden.

Grundsätzlich kann es vorteilhaft sein, dass die Schneiden 14 des vorschlagsgemäßen Gesteinsbohrers axial zum Einsteckende 2 hin in einen gemeinsamen Bohrkopfkörper übergehen, der über die Verbindungsausformung 5 formschlüssig mit dem Schaft 1 in Eingriff steht und an seiner dem Einsteckende 2 zugewandten Seite eine der Verbindungsausformung 5 entsprechende Gegenausformung aufweist.

Hier und vorzugsweise ist es allerdings so, dass die Schneiden 14 sich über die gesamte axiale Länge des Bohrkopfes 3 erstrecken und im Querschnitt senkrecht zu der Bohrerachse 7 insgesamt im wesentlichen flügelartig angeordnet sind. Dabei ist die im wesentlichen flügelartige Ausgestaltung über die gesamte axiale Länge des Bohrkopfes 3 vorgesehen. Die Schneiden 14 bilden dabei jeweils für sich genommen einzelne Stege, die im Mittenbereich entsprechend zusammenlaufen.

Hinsichtlich bevorzugter Ausgestaltungen des Bohrkopfes 3 darf auf die deutschen Anmeldungen DE 20 2007 002 120 U1 und DE 10 2008 048 599.3 verwiesen werden, die auf die Anmelderin zurückgehen und deren Inhalt insoweit jeweils zum Gegenstand dieser Anmeldung gemacht werden. Dies betrifft insbesondere eine in der DE 10 2008 048 599.3 erläuterte Ausgestaltung, bei der eine einzige Schneidkante 15 des Bohrkopfes 3 durch die Bohrerachse 7 hindurchläuft.

Hier und vorzugsweise ist der Bohrkopf 3 mit einem Einsteckabschnitt 16 ausgestattet, der formschlüssig mit der Verbindungsausformung 5 in Eingriff steht, wobei der Einsteckabschnitt 16 Bestandteil der Schneiden 14 des Bohrkopfes 3 ist.

Für die Grundform der Schneiden 14 in Draufsicht werden im folgenden bevorzugte Varianten erläutert, die zu den oben angesprochenen Varianten der Nuten 9 korrespondieren. In diesem Zusammenhang werden die Fig. 4 bis 7 nicht zur Erläuterung der Nuten 9, sondern zur Erläuterung der Schneiden 14 herangezogen.

Ebenso wie die obigen Nuten 9 können die Schneiden 14 zumindest abschnittsweise gerade verlaufen (Fig. 4a)). Denkbar ist aber, dass in Draufsicht die Schneiden 14 zumindest abschnittsweise gekrümmt verlaufen (Fig. 4b), c), d)).

Entsprechend kann es auch vorgesehen sein, dass in Draufsicht die Schneiden 14 von Innen nach Aussen entlang eines Bogens 14a mit einer Krümmungsrichtung verlaufen, die der Drehrichtung des Gesteinsbohrers entgegengerichtet (Fig. 4b)) oder gleichgerichtet (Fig. 4c)) ist. In obigem Sinne ist die Drehrichtung in Fig. 4b) linksherum, die Krümmungsrichtung dagegen rechtsherum vorgesehen. In Fig. 4c) dagegen ist die Drehrichtung linksherum und die Krümmungsrichtung ebenfalls linksherum vorgesehen.

Ebenso wie die obigen Nuten 9 können die Schneiden 14 entlang einer Bogenlinie 14a im wesentlichen S-förmig verlaufen (Fig. 4d)).

In bevorzugter Ausgestaltung ist es ferner vorgesehen, dass die Geometrie, insbesondere die Breite der Schneiden 14 über deren Verlauf gesehen variiert. Im einzelnen ist es vorzugsweise so, dass in Draufsicht die beiden Aussenkanten der Schneiden 14 jeweils nicht parallel sind (Fig. 5c)).

Im Sinne einer symmetrischen Anordnung kann es vorteilhaft sein, dass sich in Draufsicht die Schneiden 14 von der Bohrerachse 7 ausgehend nach Aussen hin verjüngen (Fig. 5a)), oder, dass sich die Schneiden 14 von Aussen zu der Bohrerachse 7 hin verjüngen (Fig. 5b)).

Die Aussenkanten der Schneiden 14 können in Draufsicht auch im wesentlichen konvex ausgebildet sein (Fig. 6a), f)) oder im wesentlichen konkav ausgebildet sein (Fig. 6b)).

Vorteilhaft kann es ferner sein, dass in Draufsicht die Schneiden 14 zumindest eine konvexe Ausbuchtung 10 in zumindest einer der Aussenkanten aufweisen (Fig. 6d)), wobei es sich bei den Ausbuchtungen 10 auch um konkave Ausbuchtungen 10 handeln kann (Fig. 6e)).

Eine oben angesprochene Ausbuchtung 10 kann im wesentlichen kreisabschnittsförmig ausgestaltet sein. Auch hier kann die Ausbuchtung 10 exzentrisch zu der Bohrerachse 7 angeordnet sein.

In besonders bevorzugter Ausgestaltung münden die Schneiden 14 jeweils im Bereich der Bohrerachse 7 in eine Mittenausformung 11, wobei die Mittenausformung 11 vorzugsweise kreisförmig (Fig. 7a), b)), elliptisch oder eckig (Fig. 7c), d)) ausgestaltet ist.

In Draufsicht gehen die Aussenkanten der Schneiden 14 jeweils über einen Radius 12 in die Aussenkante einer jeweils benachbarten Schneide 14 über, wobei der Radius 12 so ausgelegt ist, dass die Schneiden 14 im Bereich der Bohrerachse 7 jeweils eine Einschnürung aufweisen (Fig. 7e).

Bei den oben erläuterten Grundformen der Schneiden 14 in Draufsicht ist zu berücksichtigen, dass sich eine Grundform, beispielsweise eine in Draufsicht konvexe oder sich verjüngende Ausgestaltung, auch erst aus der Kombination zweier Schneiden 14 ergeben kann, wie in den Fig. 5c) und 6f) gezeigt ist.

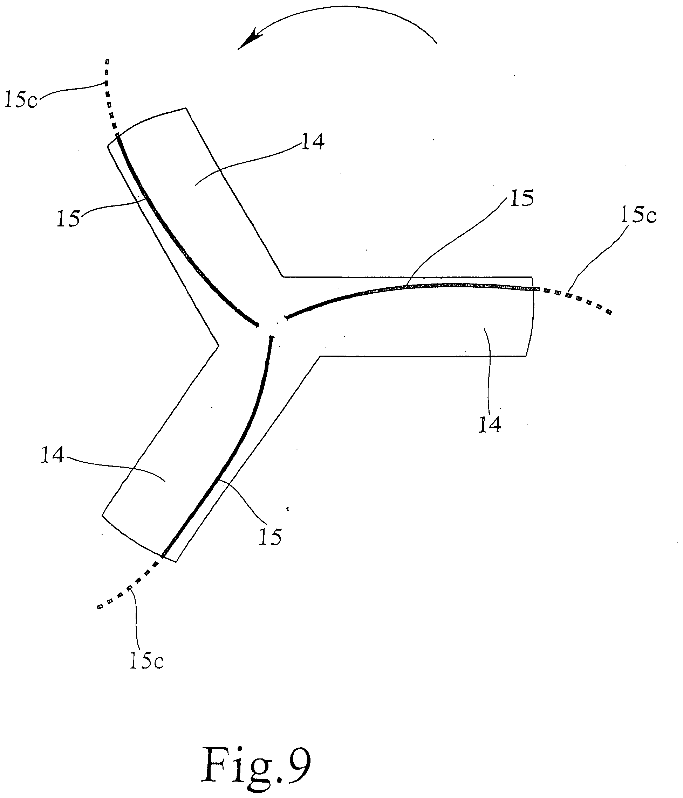

Eine ganz besonders bevorzugte Ausgestaltung der Schneiden 14 ist in Fig. 9 dargestellt. Hier ist es so, dass in Draufsicht die Schneiden 14, hier die Aussenkanten der Schneiden 14 gerade, insbesondere im wesentlichen radial, verlaufen, und dass die Schneidkanten 15 allerdings entlang eines Bogens 15c verlaufen.

In Draufsicht verlaufen die Schneidkanten 15 hier und vorzugsweise von Innen nach Aussen entlang eines Bogens 15c mit einer Krümmungsrichtung, die der Drehrichtung des Gesteinsbohrers entgegengerichtet ist. In obigem Sinne ist die Drehrichtung in Fig. 9 linksherum, die Krümmungsrichtung dagegen rechtsherum vorgesehen.

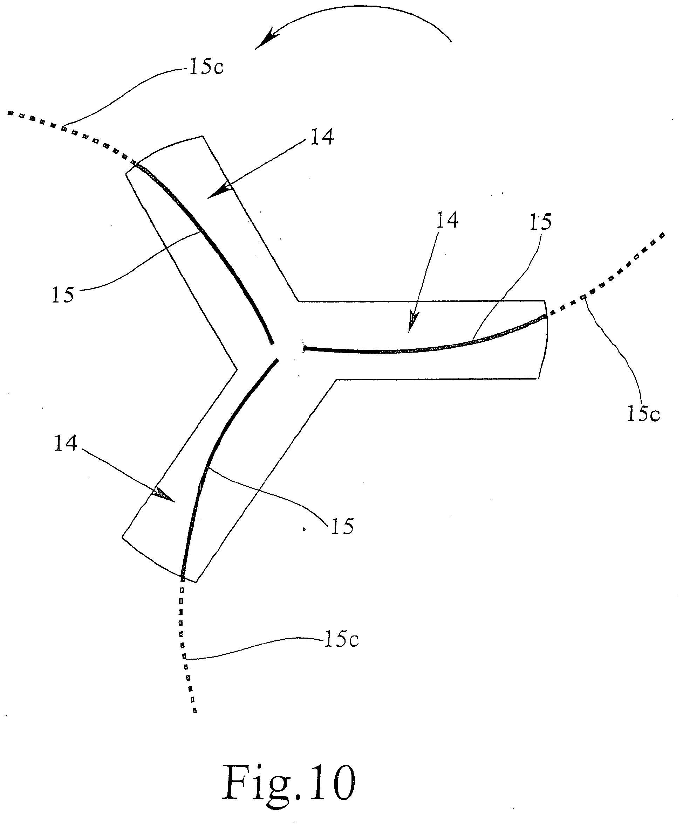

Grundsätzlich kann es aber auch vorgesehen sein, dass in Draufsicht die Schneidkanten 15 von Innen nach Aussen entlang eines Bogens 15c mit einer Krümmungsrichtung verlaufen, die der Drehrichtung des Gesteinsbohrers gleichgerichtet ist. Dabei handelt es sich gewissermaßen um schaufelförmige Schneidkanten 15. Dies ist in Fig. 10 dargestellt. In obigem Sinne ist die Drehrichtung in Fig. 10 linksherum und die Krümmungsrichtung ebenfalls linksherum vorgesehen.

Es darf darauf hingewiesen werden, dass die Ausgestaltung des Mittenbereichs des Bohrkopfes bei den in den Fig. 9 und 10 dargestellten Ausführungsbeispielen zwar besonders bevorzugt, aber nicht notwendig ist. Entsprechend sind andere Ausgestaltungen denkbar.

Dies betrifft insbesondere eine Ausgestaltung, bei der in Draufsicht die Schneiden 14 gerade und die Schneidkanten 15 entlang eines Bogens 15c verlaufen (Fig. 9). Dies betrifft ferner insbesondere eine Ausgestaltung, bei der in Draufsicht die Schneidkanten 15 von Innen nach Aussen entlang eines Bogens 15c mit einer Krümmungsrichtung verlaufen, die der Drehrichtung des Gesteinsbohrers gleichgerichtet ist (Fig. 10).

Es darf noch darauf hingewiesen werden, dass oben stets die Formulierungen "die Schneiden" und "die Schneidkanten" des Bohrers benutzt werden. Damit ist stets gemeint, dass sich die jeweiligen Ausführungen auf zumindest einen Teil der Schneiden 14 bzw. Schneidkanten 15, also auf mindestens eine der Schneiden 14 bzw. Schneidkanten 15, und vorzugsweise auf alle Schneiden 14 bzw. Schneidkanten 15 des Bohrers beziehen. In diesem Zusammenhang darf auch klargestellt werden, dass alle erläuterten Ausgestaltungen einer Schneide 14 mit Schneidkante 15 beliebig miteinander kombiniert werden können.

## Patentansprüche

1. Verfahren zur Herstellung eines Bohrers, insbesondere eines Gesteinsbohrers, mit einem Schaft (1) mit Einsteckende (2) und einem Bohrkopf (3), wobei in der dem Einsteckende (2) abgewandten Stirnseite (4) des Schafts (1) eine Verbindungsausformung (5) für einen formschlüssigen Eingriff mit dem Bohrkopf (3) vorgesehen ist, wobei in einem Verfahrensschritt ein im wesentlichen zylindrischer Schaft-Rohling (1) erzeugt wird, wobei in einem nachfolgenden Verfahrensschritt die Verbindungsausformung (5) in den Schaft (1) eingebracht wird und wobei in einem weiter nachfolgenden Verfahrensschritt der Bohrkopf (3) über die Verbindungsausformung (5) formschlüssig in Eingriff mit dem Schaft (1) gebracht wird,
**dadurch gekennzeichnet,**
**dass** die Verbindungsausformung (5) durch elektrochemische Bearbeitung (ECM) in den Schaft (1) eingebracht wird und dass die Verbindungsausformung (5) mindestens eine Nut (9) und/oder mindestens einen Steg aufweist.

2. Verfahren nach Anspruch 1, **dadurch gekennzeichnet, dass** zum Einbringen der Verbindungsausformung (5) durch elektrochemische Bearbeitung (ECM) ein ECM-Werkzeug über dem Schaft-Rohling (1) unter Einschluß eines Elektrolyts positioniert und eine elektrische Gleichspannung zwischen dem ECM-Werkzeug und dem Schaft-Rohling (1) angelegt wird, vorzugsweise, dass das ECM-Werkzeug zumindest teilweise als Negativform bezogen auf die Verbindungsausformung (5) ausgestaltet ist

3. Verfahren nach einem der vorhergehenden Ansprüche, **dadurch gekennzeichnet, dass** die dem Einsteckende (2) abgewandte Stirnseite (4) des Schaft-Rohlings (1) vor dem Einbringen der Verbindungsausformung (5) eine Stirnfläche (8) aufweist, die eben, kegelförmig oder rundlich ausgebildet ist.

4. Verfahren nach einem der vorhergehenden Ansprüche, **dadurch gekennzeichnet, dass** die Verbindungsausformung (5) mehrere Nuten (9) oder Stege, insbesondere drei Nuten (9) oder Stege aufweist.

5. Verfahren nach Anspruch 4, **dadurch gekennzeichnet, dass** sich in Draufsicht die Nuten (9) oder Stege im wesentlichen flügelartig von einem Flügelmittelpunkt aus erstrecken, vorzugsweise, dass der Flügelmittelpunkt in der Bohrerachse (7) liegt, oder, dass der Flügelmittelpunkt ausserhalb der Bohrerachse (7) liegt.

6. Verfahren nach einem der vorhergehenden Ansprüche, **dadurch gekennzeichnet, dass** in Draufsicht die Nut (9) oder der Steg zumindest abschnittsweise gekrümmt verläuft.

7. Verfahren nach einem der vorhergehenden Ansprüche, **dadurch gekennzeichnet, dass** in Draufsicht die Nut (9) oder der Steg von Innen nach Aussen entlang eines Bogens (9a) mit einer Krümmungsrichtung verläuft, die der Drehrichtung des Bohrers entgegengerichtet ist.

8. Verfahren nach einem der vorhergehenden Ansprüche, **dadurch gekennzeichnet, dass** der Nutgrund der Nut (9) mindestens einen Bodensteg (17) mit einer axialen Höhe aufweist, der von dem Nutgrund im übrigen in axialer Richtung abragt, vorzugsweise, dass der Bodensteg (17) den Bohrkopf (3) derart abstützt, dass zwischen dem Nutgrund und dem Bohrkopf (3) ein Zwischenraum verbleibt, weiter vorzugsweise, dass in einem nachfolgenden Verfahrensschritt der Bohrkopf (3) mit dem Schaft (1) verlötet wird und dass nach dem Verlöten der Zwischenraum zwischen dem Nutgrund und dem Bohrkopf (3) zumindest im Wesentlichen mit Lot gefüllt ist.

9. Verfahren nach Anspruch 8, **dadurch gekennzeichnet, dass** die Längserstrekkung des Bodenstegs (17) auf die Längserstreckung der Nut (9) ausgerichtet ist, vorzugsweise, dass sich der Bodensteg (17) über zumindest einen Teil der Nut (9) erstreckt.

10. Verfahren nach Anspruch 8 oder 9, **dadurch gekennzeichnet, dass** die Höhe des Bodenstegs (17) über seine Längserstreckung gesehen konstant ist, oder, dass sich die Höhe des Bodenstegs (17) über seine Längserstreckung gesehen verändert.

11. Verfahren nach einem der Ansprüche 8 bis 10, **dadurch gekennzeichnet, dass** sich die Höhe des Bodenstegs (17) von einem radial innenliegenden Bereich zu einem radial außenliegenden Bereich hin reduziert.

12. Verfahren nach Anspruch 5 und einem der Ansprüche 8 bis 11, **dadurch gekennzeichnet, dass** die mehreren Nuten (9) jeweils einen Bodensteg (17) aufweisen, vorzugsweise, dass die Bodenstege (17) von oben gesehen sternförmig im Bereich der Bohrerachse (7) zusammenlaufen.

13. Verfahren nach einem der Ansprüche 8 bis 12, **dadurch gekennzeichnet, dass** im Bereich der Bohrerachse (7) der Nutgrund eine axiale Zentralerhebung (18) aufweist, vorzugsweise, dass der Bodensteg (17) oder die Bodenstege (17) in die axiale Zentralerhebung (18) übergeht bzw. übergehen.

14. Bohrer, insbesondere Gesteinsbohrer, mit einem Schaft (1) mit Einsteckende (2) und einem Bohrkopf (3), wobei der Bohrkopf (3) über eine Verbindungsausformung (5) im Schaft (1) formschlüssig mit dem Schaft (1) verbunden ist, wobei der Bohrkopf (3) mindestens zwei Schneiden (14) aufweist, wobei die Schneiden (14) an ihrer Oberseite jeweils eine Schneidkante (15) aufweisen, die durch eine vorlaufend angeordnete Spanfläche (15a) und durch eine nachlaufend angeordnete Freifläche (15b) gebildet ist,
**dadurch gekennzeichnet,**
**dass** die Verbindungsausformung (5) eine durch elektrochemische Bearbeitung (ECM) in den Schaft (1) eingebrachte Ausformung ist und wobei die Verbindungsausformung (5) mindestens eine Nut (9) und/oder mindestens einen Steg aufweist.

15. Bohrer nach Anspruch 14, **dadurch gekennzeichnet, dass** die Verbindungsausformung (5) nach dem kennzeichnenden Teil eines oder mehrerer der Ansprüche 4 bis 13 ausgestaltet ist.

## Claims

1. Method for producing a drill bit, in particular a masonry drill bit, having a shank (1) with an insertion end (2) and a drill head (3), wherein a connecting recess (5) for a form-fitting engagement with the drill head (3) is provided in the end side (4) of shank (1) that is remote from the insertion end (2), wherein, in one method step, a substantially cylindrical shank blank (1) is created, wherein, in a subsequent method step, the connecting recess (5) is introduced into the shank (1), and wherein, in another subsequent method step, the drill head (3) is brought into form-fitting engagement with the shank (1) via the connecting recess (5),
**characterized**
**in that** the connecting recess (5) is introduced into the shank (1) by electrochemical machining (ECM), and in that the connecting recess (5) has at least one groove (9) and/or at least one web.

2. Method according to Claim 1, **characterized in that**, in order to introduce the connecting recess (5) by electrochemical machining (ECM), an ECM tool is positioned over the shank blank (1) with inclusion of an electrolyte, and an electrical DC voltage is applied between the ECM tool and the shank blank (1), preferably in that the ECM tool is configured at least partially as a negative form with regard to the connecting recess (5).

3. Method according to either of the preceding claims, **characterized in that**, before the introduction of the connecting recess (5), the end side (4) of the shank blank (1) that is remote from the insertion end (2) has an end face (8) that is formed in a planar, conical or rounded manner.

4. Method according to one of the preceding claims, **characterized in that** the connecting recess (5) has a plurality of grooves (9) or webs, in particular three grooves (9) or webs.

5. Method according to Claim 4, **characterized in that**, in plan view, the grooves (9) or webs extend in a substantially wing-like manner from a wing centre, preferably **in that** the wing centre is located in the drill-bit axis (7), or **in that** the wing centre is located outside the drill-bit axis (7).

6. Method according to one of the preceding claims, **characterized in that**, in plan view, the groove (9) or the web extends at least partially in a curved manner.

7. Method according to one of the preceding claims, **characterized in that**, in plan view, the groove (9) or the web extends from inside to outside along a curve (9a) with a curvature direction that is in the opposite direction to the direction of rotation of the drill bit.

8. Method according to one of the preceding claims, **characterized in that** the groove bottom of the groove (9) has at least one bottom web (17) with an axial height that otherwise projects from the groove bottom in an axial direction, preferably **in that** the bottom web (17) supports the drill head (3) such that an intermediate space remains between the groove bottom and the drill head (3), more preferably **in that**, in a subsequent method step, the drill head (3) is soldered to the shank (1) and **in that**, after soldering, the intermediate space between the groove bottom and the drill head (3) is at least substantially filled with solder.

9. Method according to Claim 8, **characterized in that** the longitudinal extent of the bottom web (17) is oriented on the longitudinal extent of the groove (9), preferably **in that** the bottom web (17) extends over at least a part of the groove (9).

10. Method according to Claim 8 or 9, **characterized in that** the height of the bottom web (17) is constant as seen along its longitudinal extent, or **in that** the height of the bottom web (17) varies as seen along its longitudinal extent.

11. Method according to one of Claims 8 to 10, **characterized in that** the height of the bottom web (17) reduces from a radially internal region to a radially external region.

12. Method according to Claim 5 and one of Claims 8 to 11, **characterized in that** the plurality of grooves (9) each have a bottom web (17), preferably **in that** the bottom webs (17) converge in a star shape, as seen from above, in the region of the drill-bit axis (7).

13. Method according to one of Claims 8 to 12, **characterized in that**, in the region of the drill-bit axis (7), the groove bottom has an axial central protuberance (18), preferably **in that** the bottom web (17) or the bottom webs (17) transition(s) into the axial central protuberance (18).

14. Drill bit, in particular masonry drill bit, having a shank (1) with an insertion end (2) and a drill head (3), wherein the drill head (3) is connected to the shank (1) in a form-fitting manner via a connecting recess (5) in the shank (1), wherein the drill head (3) has at least two lips (14), wherein the lips (14) each have on their top side a cutting edge (15) that is formed by a rake face (15a) arranged in a leading manner and a flank (15b) arranged in a trailing manner,
**characterized**
**in that** the connecting recess (5) is a recess introduced into the shank (1) by electrochemical machining (ECM), and wherein the connecting recess (5) has at least one groove (9) and/or at least one web.

15. Drill bit according to Claim 14, **characterized in that** the connecting recess (5) is configured according to the characterizing part of one or more of Claims 4 to 13.

## Revendications

1. Procédé de fabrication d'un foret, notamment d'un foret de maçonnerie, comprenant une tige (1) dotée d'une extrémité d'insertion (2) et d'une tête de perçage (3), dans lequel, dans la face frontale (4) de la tige (1) opposée à l'extrémité d'insertion (2), une partie saillante de liaison (5) est prévue pour une entrée en prise par complémentarité de forme avec la tête de perçage (3), dans lequel, dans une étape de procédé, une ébauche de tige (1) sensiblement cylindrique est produite, dans lequel, dans une étape de procédé suivante, la partie saillante de liaison (5) est ménagée dans la tige (1), et dans lequel, dans une autre étape de procédé suivante, la tête de perçage (3) est amenée en prise par complémentarité de forme avec la tige (1) par le biais de la partie saillante de liaison (5),
**caractérisé en ce que**,
la partie saillante de liaison (5) est ménagée dans la tige (1) par usinage électrochimique (ECM), et **en ce que** la partie saillante de liaison (5) comprend au moins une rainure (9) et/ou au moins une nervure.

2. Procédé selon la revendication 1, **caractérisé en ce que**, pour ménager la partie saillante de liaison (5) par usinage électrochimique (ECM), un outil ECM est positionné sur l'ébauche de tige (1) en incluant un électrolyte et une tension électrique continue est appliquée entre l'outil ECM et l'ébauche de tige (1), de préférence **en ce que** l'outil ECM est configuré au moins partiellement en tant que moule négatif par rapport à la partie saillante de liaison (5).

3. Procédé selon l'une des revendications précédentes, **caractérisé en ce que** la face frontale (4) de l'ébauche de tige (1) opposée à l'extrémité d'insertion (2) comprend, avant que la partie saillante de liaison (5) ne soit ménagée, une surface frontale (8) qui est de forme plane, conique ou arrondie.

4. Procédé selon l'une des revendications précédentes, **caractérisé en ce que** la partie saillante de liaison (5) comprend plusieurs rainures (9) ou nervures, en particulier trois rainures (9) ou nervures.

5. Procédé selon la revendication 4, **caractérisé en ce qu'**en vue de dessus, les rainures (9) ou nervures s'étendent sensiblement en forme d'ailettes à partir d'un centre d'ailette, de préférence **en ce que** le centre d'ailette se situe dans l'axe de foret (7), ou en ce que le centre d'ailette se situe à l'extérieur de l'axe de foret (7).

6. Procédé selon l'une des revendications précédentes, **caractérisé en ce qu'**en vue de dessus, la rainure (9) ou la nervure s'étend de manière courbe au moins dans certaines parties.

7. Procédé selon l'une des revendications précédentes, **caractérisé en ce qu'**en vue de dessus, la rainure (9) ou la nervure s'étend, de l'intérieur vers l'extérieur, le long d'un arc (9a) présentant un sens de courbure qui est opposé au sens de rotation du foret.

8. Procédé selon l'une des revendications précédentes, **caractérisé en ce que** le fond de la rainure (9) comprend au moins une nervure de fond (17) présentant une hauteur axiale qui fait saillie à partir du fond de rainure par ailleurs dans la direction axiale, de préférence **en ce que** la nervure de fond (17) supporte la tête de perçage (3) de telle sorte qu'un espace intermédiaire demeure entre le fond de rainure et la tête de perçage (3), mieux encore **en ce que**, dans une étape de procédé suivante, la tête de perçage (3) est brasée sur la tige (1), et **en ce qu'**après le brasage, l'espace intermédiaire entre le fond de rainure et la tête de perçage (3) est rempli au moins sensiblement de métal d'apport de brasage.

9. Procédé selon la revendication 8, **caractérisé en ce que** l'étendue longitudinale de la nervure de fond (17) est alignée sur l'étendue longitudinale de la rainure (9), de préférence **en ce que** la nervure de fond (17) s'étend sur au moins une partie de la rainure (9).

10. Procédé selon la revendication 8 ou 9, **caractérisé en ce que** la hauteur de la nervure de fond (17) est constante vue sur son étendue longitudinale, ou **en ce que** la hauteur de la nervure de fond (17) varie vue sur son étendue longitudinale.

11. Procédé selon l'une des revendications 8 à 10, **caractérisé en ce que** la hauteur de la nervure de fond (17) diminue d'une région radialement intérieure à une région radialement extérieure.

12. Procédé selon la revendication 5 et l'une des revendications 8 à 11, **caractérisé en ce que** les multiples rainures (9) comprennent respectivement une nervure de fond (17), de préférence **en ce que** les nervures de fond (17) convergent, vues d'en haut, en forme d'étoile dans la région de l'axe de foret (7).

13. Procédé selon l'une des revendications 8 à 12, **caractérisé en ce que**, dans la région de l'axe de foret (7), le fond de rainure comprend un rehaussement central axial (18), de préférence **en ce que** la nervure de fond (17) ou les nervures de fond (17) se prolonge(nt) par le rehaussement central axial (18).

14. Foret, notamment foret de maçonnerie, comprenant une tige (1) dotée d'une extrémité d'insertion (2) et d'une tête de perçage (3), dans lequel la tête de perçage (3) est reliée par complémentarité de forme à la tige (1) par le biais d'une partie saillante de liaison (5) dans la tige (1), dans lequel la tête de perçage (3) comprend au moins deux tranchants (14), dans lequel les tranchants (14) comprennent, sur leur face supérieure, respectivement une arête de coupe (15) qui est formée par une face de coupe (15a) disposée en avant et par une face de dépouille (15b) disposée en arrière,
**caractérisé en ce que**
la partie saillante de liaison (5) est une partie saillante ménagée dans la tige (1) par usinage électrochimique (ECM), et dans lequel la partie saillante de liaison (5) comprend au moins une rainure (9) et/ou au moins une nervure.

15. Foret selon la revendication 14, **caractérisé en ce que** la partie saillante de liaison (5) est configurée selon la partie caractérisante d'une ou plusieurs des revendications 4 à 13.
